Europäisches Patentamt

European Patent Office

Office européen des brevets

(11) Veröffentlichungsnummer: **0 225 625**
**A2**

(12) **EUROPÄISCHE PATENTANMELDUNG**

(21) Anmeldenummer: 86117047.0

(22) Anmeldetag: 08.12.86

(51) Int. Cl.⁴: **G01S 3/78** , **G01S 17/46**

(30) Priorität: 09.12.85 DE 3543786
09.12.85 DE 3543787

(43) Veröffentlichungstag der Anmeldung:
16.06.87 Patentblatt 87/25

(84) Benannte Vertragsstaaten:
**AT BE CH DE ES FR GB GR IT LI LU NL SE**

(71) Anmelder: **Siemens Aktiengesellschaft Berlin und München**
**Wittelsbacherplatz 2**
**D-8000 München 2(DE)**

(72) Erfinder: **Marguerre, Hans-Helmut, Dipl.-Phys.**
**Mähfeldstrasse 23**
**D-7541 Straubenhardt 4(DE)**

Ein Antrag gemäss Regel 88 EPÜ auf Ersetzung der vorläufigen Zeichnungen liegt vor. Über diesen Antrag wird im Laufe des Verfahrens vor der Prüfungsabteilung eine Entscheidung getroffen werden (Richtlinien für die Prüfung im EPA, A-V, 2.2).

(54) **Einrichtung zur Bestimmung der Orte von Lichtflecken auf mindestens einem flächenhaften Lichtsensor.**

(57) Es wird eine Einrichtung zur Bestimmung des Ortes eines Lichtflecks auf einer Fläche eines Lichtsensors - (23) offenbart, der eine Fluoreszenzplatte (2) enthält, auf deren Oberseite (3) der Lichtfleck abbildbar ist. An zumindest zwei einander gegenüberliegenden Seitenflächen (4, 5, 6, 7) der Fluoreszenzplatte (2) ist jeweils eine Fotodetektor-Einrichtung (24, 25, 26, 27) angeordnet. Die elektrischen Anschlüsse (12 bis 19) der Fotodetektor-Einrichtungen (24, 25, 26, 27) bilden die elektrischen Anschlußelemente des Lichtsensors (23), an denen eine elektrische Auswerteeinrichtung zur Gewinnung mindestens eines elektrischen Signals angeschlossen ist, dessen Größe ein Maß für den Ort des Lichtflecks ist.

FIG 2

## Einrichtung zur Bestimmung der Orte von Lichtflecken auf mindestens einem flächenhaften Lichtsensor

Die Erfindung betrifft eine Einrichtung gemäß dem Oberbegriff des Anspruchs 1.

Eine derartige Einrichtung ist in der Zeitschrift "Technisches Messen", 1979, auf den Seiten 369 bis 373 und 415 bis 420 beschrieben. Bei der bekannten Einrichtung wird als Lichtsensor eine positionsempfindliche Fotodiode verwendet, an deren elektrische Anschlußelemente eine elektrische Auswerteeinrichtung angeschlossen ist. Die elektrische Auswerteeinrichtung enthält eine Gleichspannungquelle und eine Meßwertauswerteschaltung. Infolge der an der positionsempfindlichen Fotodiode anliegenden Gleichspannung fließen über die elektrischen Anschlußelemente elektrische Ströme, deren Intensität abhängig vom Ort eines Lichtflecks auf der positionsempfindlichen Fläche der positionsempfindlichen Fotodiode ist. Aus diesen elektrischen Strömen werden in der Meßwertauswerteschaltung elektrische Signale gewonnen, deren Größe ein Maß für den Ort des Lichtflecks ist. Bei der bekannten Einrichtung ist der Bereich, in dem der Ort des Lichtflecks bestimmt werden kann, verhältnismäßig klein, weil positionsempfindliche Dioden relativ kleine Abmessungen aufweisen.

Der Erfindung liegt die Aufgabe zugrunde, eine Einrichtung zur Bestimmung der Orte von Lichtflecken auf einer Fläche mindestens eines Lichtsensors zu schaffen, die es gestattet, die Orte der Lichtflecken in einem verhältnismäßig großen Bereich zu erfassen und mit einfachen Mitteln auszuwerten.

Zur Lösung der Aufgabe weist bei einer Einrichtung der eingangs angegebenen Art erfindungsgemäß der Lichtsensor die im Kennzeichen des Anspruchs 1 angegebenen Merkmale auf.

Unter einer Fluoreszenzplatte ist dabei ein plattenförmiger fluoreszierende Moleküle enthaltender Lichtkonzentrator zu verstehen, wie er beispielsweise aus der DE-OS 26 20 115 bekannt ist. Auf die Fluoreszenzplatte auftreffendes Licht regt fluoreszierende Moleküle zur Fluoreszenz an. Das Fluoreszenzlicht wird in der Fluoreszenzplatte zu den Seitenflächen hin durch Totalreflexion übertragen. Das übertragene Licht wird an zwei aneinandergrenzenden Seitenflächen der Fluoreszenzplatte mittels dort angeordneter Solarzellen erfaßt, welche die Lichtenergie des Fluoreszenzlichtes in elektrische Energie wandeln, mit der Anzeigesysteme beleuchtet werden können.

Bei der erfindungsgemäßen Einrichtung wird ausgenutzt, daß von einem Lichtfleck auf der Oberseite einer Fluoreszenzplatte angeregtes Fluoreszenzlicht sich entsprechend der Entfernung des Lichtflecks von den Seitenflächen auf die Seitenflächen verteilt. Da Fluoreszenzplatten verhältnismäßig groß ausgeführt werden können, ist mit einer Einrichtung gemäß der Erfindung der Ort eines Lichtflecks wegen der verhältnismäßig großen Oberseite der Fluoreszenzplatte in einem relativ großen Bereich bestimmbar. Ein weiterer Vorteil der erfindungsgemäßen Einrichtung ist, daß die Abmessungen und Gestalt der Fluoreszenzplatte frei wählbar sind, wodurch der Lichtsensor in seiner Größe unterschiedlichen Meßaufgaben angepaßt werden kann.

Bei einer bevorzugten Ausführung der erfindungsgemäßen Einrichtung ist die Fluoreszenzplatte quaderförmig ausgebildet, und an jeder Seitenfläche der Fluoreszenzplatte ist eine Fotodetektor-Einrichtung angeordnet. Mit dieser Einrichtung ist in einfacher Weise der Ort des Lichtflecks in kartesischen Koordinaten bestimmbar.

Als Fotoelemente in den Fotodetektor-Einrichtungen können bei relativ großen Fluoreszenzplatten großflächige Fotoelemente, wie die eingangs beschriebenen positionsempfindlichen Fotodioden oder auch lichtabhängige Widerstände, vorgesehen sein. Jedoch ist es vorteilhaft, wenn jede Fotodetektor-Einrichtung aus mehreren räumlich nebeneinander angeordneten und elektrisch parallel geschalteten Fotodioden besteht, die an der jeweiligen Seitenfläche der Fluoreszenzplatte anliegen, da dann die Fotodetektor-Einrichtung an unterschiedliche Kantenlängen der Fluoreszenzplatte in einfacher Weise anpaßbar ist. Bei dieser Ausführungsform ergibt sich insbesondere dann, wenn eine Fluoreszenzplatte mit Abmessungen in der Größenordnung der lichtempfindlichen Fläche einer positionsempfindlichen Fotodiode verwendet wird, der Vorteil, daß wegen der Anbringung der Fotodetektor-Einrichtung an verhältnismäßig kleinen Seitenflächen der Fluoreszenzplatte in den Fotodetektor-Einrichtungen Fotoelemente mit im Vergleich zur positionsempfindlichen Fotodiode kleiner lichtempfindlicher Fläche verwendet werden können. Derartige Fotoelemente in der üblichen Halbleiter-Ausführung weisen eine kleine Sperrschichtkapazität auf, da letztere der lichtempfindlichen Fläche proportional ist. Da eine kleine Sperrschichtkapazität die Signalbearbeitungsgeschwindigkeit positiv beeinflußt, können mit einer solchen Einrichtung gemäß der Erfindung Veränderungen des Ortes eines Lichtflecks besonders schnell registriert werden.

Eine weitere besonders vorteilhafte Ausgestaltung der erfindungsgemäßen Einrichtung liegt vor, wenn jede Fotodetektor-Einrichtung eine Lichtleiteranordnung enthält, die an ihrem einen Ende mit der jeweiligen Seitenfläche optisch gekoppelt ist und an ihrem anderen Ende ein Fotoelement trägt. Diese Einrichtung zeichnet sich durch einfachen Aufbau aus und trägt zur Störsicherheit bei der Erfassung des Ortes des Lichtflecks bei. Insbesondere hat sie den Vorteil, daß, unabhängig von der Größe der Fluoreszenzplatte, eine schnelle Signalverarbeitung möglich ist, weil diese lediglich durch die kleine Sperrschichtkapazität des Fotoelementes beeinflußt ist, das eine kleine lichtempfindliche Fläche aufweist. Die Lichtleiteranordnung kann vorteilhafterweise aus mehreren Lichtleiterfasern bestehen, die an ihrem einen Ende mit ihrer Stirnseite der jeweiligen Seitenfläche gegenüberliegend angeordnet sind.

Besteht die Lichtleiteranordnung vorteilhafterweise aus einem Fluoreszenzlichtleiter, der sich mit seinem einen Ende entlang der jeweiligen Seitenfläche erstreckt, so ist bei dieser Lichtleiteranordnung die optische Kopplung sehr einfach gelöst. Der Fluoreszenzlichtleiter sammelt dabei das an der Seitenfläche austretende Fluoreszenzlicht und führt das dann in ihm entstehende Fluoreszenzlicht mit größerer Wellenlänge zu dem Fotoelement an seinem anderen Ende.

Ein weiteres Ausführungsbeispiel der erfindungsgemäßen Einrichtung weist die im Anspruch 7 angegebenen Merkmale auf, mit der eine vom Einfallswinkel des Lichts abhängige Größe erzeugt werden kann.

Bei einer bekannten Meßanordnung ("Qualitätstechnik" 30 (1985) Heft 7, Seiten 205 und 206) wird über die Bestimmung des Einfallswinkels von Licht eine Abstandsänderung eines Objektes von einer Lichtquelle erfaßt. Die bekannte Meßanordnung enthält zu diesem Zwecke, der Lichtquelle nachgeordnet, eine erste Optik, mit der ein gebündelter Lichtstrahl erzeugt wird. Dieser gebündelte Lichtstrahl trifft auf das Objekt und wird von dessen Oberfläche als Licht auf eine Sammeloptik reflektiert. In dieser Sammeloptik wird das reflektierte Licht gesammelt und auf einen positionsempfindlichen Lichtempfänger geleitet. Ändert sich bei der bekannten Meßanordnung der Abstand des Objektes von der Lichtquelle, dann führt dies zu einer Änderung des Einfallswinkels des Lichtes in die Sammeloptik und damit zu einem anderen Auftreffpunkt des die Sammeloptik verlassenden Lichtstrahles auf dem positionsempfindlichen Lichtempfänger. An dem positionsempfindlichen Lichtempfänger ist eine Meßelektronik angeschlossen, in der aus den unterschiedlichen Positionen des Lichtstrahls auf dem Empfänger eine Meßgröße ermittelt wird, die der Abstandsänderung proportional ist.

Ein wesentlicher Vorteil des erfindungsgemäßen Ausführungsbeispiels besteht darin, daß sie -auch bei diffusem Licht -ohne eine Sammeloptik vor dem Lichtempfänger auskommt, wodurch der Herstellungsaufwand vergleichsweise gering wird. Dazu trägt in vorteilhafter Weise auch bei, daß infolge Fortfalls der Sammeloptik aufwendige Justierarbeiten bei der Herstellung der erfindungsgemäßen Einrichtung unterbleiben können. Ein weiterer Vorteil der erfindungsgemäßen Meßanordnung wird darin gesehen, daß sie infolge der Verwendung von Fluoreszenzplatten für den Lichtempfänger verhältnismäßig großflächig ohne besonderen zusätzlichen Aufwand ausgeführt sein kann, was bei dem bekannten positionsempfindlichen Lichtempfänger nicht der Fall ist. Es kann somit mit der erfindungsgemäßen Einrichtung auch ein relativ-großer Bereich des Einfallswinkels erfaßt werden.

Bei dieser erfindungsgemäßen Einrichtung können an den Seitenflächen jeder Fluoreszenzplatte einander gegenüberliegend nur jeweils zwei Fotodetektor-Einrichtungen vorhanden sein. Bei einer derartigen Ausstattung der Fluoreszenzplatte ist die Schwerpunktkoordinate des einfallenden diffusen Lichts in einer Dimension bestimmbar. Dies ist zur Erfassung des Einfallswinkels dann ausreichend, wenn eine Änderung des Einfallswinkels nur in einer Ebene ermittelt werden soll.

Ist dagegen beabsichtigt, den Einfallswinkel als Raumwinkel zu ermitteln, dann ist jede Fluoreszenzplatte an jeder ihrer Seitenflächen mit einer Fotodetektor-Einrichtung zu versehen, mit der dann in einfacher Weise der Ort des Fleckes des einfallenden diffusen Lichts in kartesischen Koordinaten bestimmbar ist.

Eine vorteilhafte Weiterbildung besteht in ihrer Anwendung zur Abstandsmessung eines Objektes, indem dem Lichtempfänger eine einen gebündelten Lichtstrahl auf das Objekt sendende Lichtquelle räumlich fest zugeordnet ist. Der besondere Vorteil der Anwendung der erfindungsgemäßen Einrichtung zur Abstandsmessung besteht darin, daß mit ihr ohne jede Sammeloptik eine genaue Messung von Abstandsänderungen des Objektes zu der räumlich fest angeordneten Lichtquelle möglich ist. Ein weiterer Vorteil wird darin gesehen, daß eine Messung auch des Abstandes des Objektes von der Lichtquelle bzw. vom Lichtempfänger möglich ist.

Besonders einfach hinsichtlich der Auswertung ist die Anwendung der Einrichtung dann, wenn die Lichtquelle derart angeordnet ist, daß der von ihr ausgesendete, gebündelte Lichtstrahl im rechten Winkel zur Ebene der Blende verläuft.

Im folgenden ist die Erfindung anhand von Ausführungsbeispielen näher erläutert.

Figur 1 zeigt stark vereinfacht dargestellt die Aufsicht auf ein Ausführungsbeispiel eines Lichtsensors einer Einrichtung gemäß der Erfindung;

Figur 2 zeigt ein weiteres Ausführungsbeispiel des Lichtsensors;

Figur 3 zeigt die schaltungsgemäße Verknüpfung eines Lichtsensors nach Figur 1 oder Figur 2 mit einer elektrischen Auswerteeinrichtung zu einer Einrichtung gemäß der Erfindung, und in

Figur 4 ist ein Ausführungsbeispiel der erfindungsgemäßen Einrichtung in einer Anwendung zur Abstandsmessung eines Objektes dargestellt.

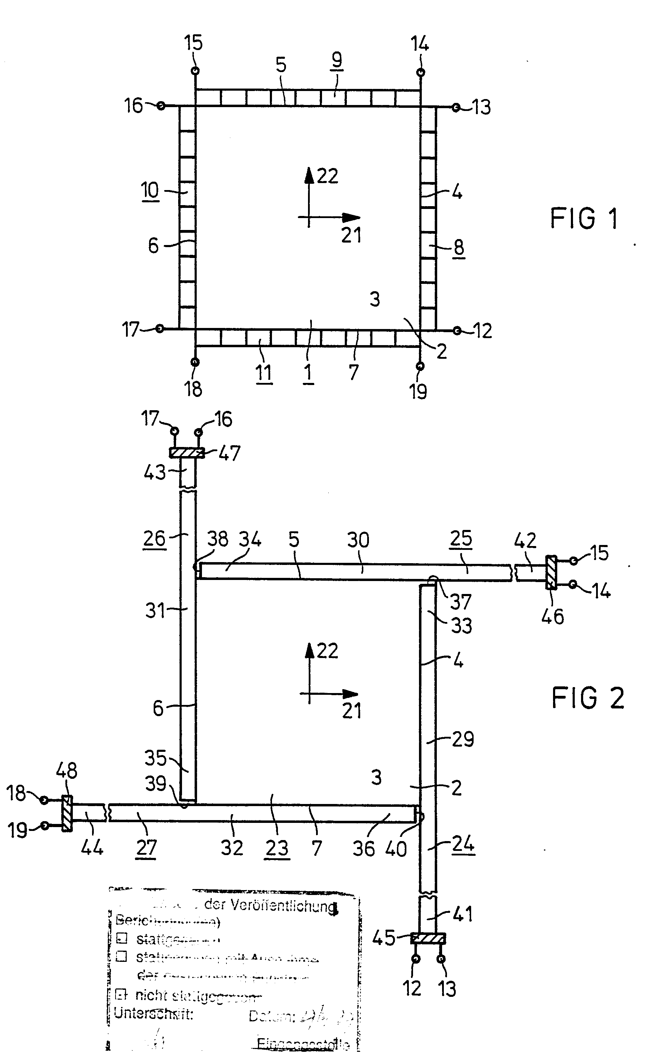

Der in Figur 1 dargestellte Lichtsensor 1 enthält eine quaderförmige Fluoreszenzplatte 2, auf deren Oberseite 3 ein Lichtfleck abbildbar ist. An Seitenflächen 4, 5, 6, 7 der Fluoreszenzplatte 2 ist jeweils eine Fotodetektor-Einrichtung 8, 9, 10 und 11 angeordnet. Jede der Fotodetektor-Einrichtungen 8, 9, 10 und 11 besteht aus einer Fotodiodenzeile parallel geschalteter Fotodioden. Die Verbindungspunkte der parallel geschalteten Fotodioden jeder Fotodiodenzeile sind herausgeführt; sie bilden elektrische Anschlüsse der Fotodetektor-Einrichtungen 8 bis 11 und stellen somit elektrische Anschlußelemente 12 bis 19 des Lichtsensors 1 dar. Die Koordinatenachsen eines ebenen kartesischen Koordinatensystems auf der Oberseite 3 der Fluoreszenzplatte 2 sind mit 21 und 22 bezeichnet.

In Figur 2 sind mit Elementen nach Figur 1 übereinstimmende Teile mit denselben Bezugszeichen versehen. Ein Lichtsensor 23 weist wiederum eine Fluoreszenzplatte 2 auf, an deren Seitenflächen 4, 5, 6 und 7 jeweils eine Fotodetektor-Einrichtung 24, 25, 26 und 27 angeordnet ist. Jede Fotodetektor-Einrichtung 24 bis 27 enthält einen Fluoreszenzlichtleiter 29, 30, 31 und 32, die sich mit ihrem jeweils einen Ende 33, 34, 35 und 36 entlang den Seitenflächen 4, 5, 6 und 7 erstrecken. Die Stirnseiten 37 bis 40 der Enden 33 bis 36 sind verspiegelt. An seinem anderen Ende 41, 42, 43 und 44 trägt jeder Fluoreszenz lichtleiter 24, 25, 26 und 27 eine als Fotoelement dienende Fotodiode 45, 46, 47 und 48, deren elektrische Anschlüsse die Anschlußelemente 12 bis 19 des Lichtsensors 23 bilden.

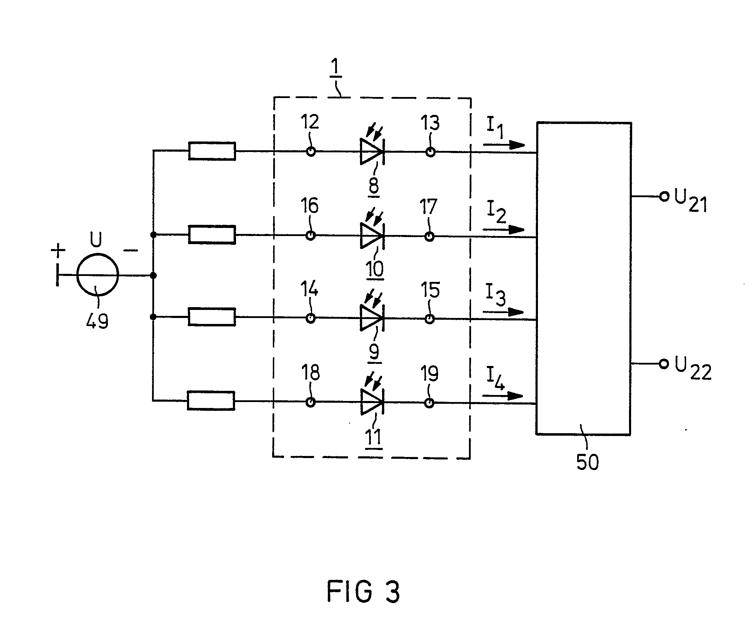

Wie in Figur 3 dargestellt, sind die elektrischen Anschlußelemente 12 bis 19 der Fotodetektor-Einrichtungen 8, 9, 10 und 11 (vergl. Figur 1) mit einer elektrischen Auswerteeinrichtung verbunden, die unter anderem eine Gleichspannungsquelle 49 und eine Meßwertauswerteschaltung 50 enthält. Bei der Meßwertauswerteschaltung 50 kann es sich um die aus der eingangs genannten Literaturstelle in Bild 7 auf Seite 416 dargestellte Schaltung handeln.

Im folgenden ist die Wirkungsweise der erfindungsgemäßen Einrichtung erläutert. Ein auf die Oberseite 3 der Fluoreszenzplatte 2 abgebildeter Lichtfleck regt in der Fluoreszenzplatte 2 eingelagerte Fluoreszenzmoleküle zur Fluoreszenz an. Das Fluoreszenzlicht gelangt durch Totalreflexion zu den Seitenflächen 4, 5, 6 und 7 der Fluoreszenzplatte 2. Die Intensität des zu den Seitenflächen 4 bis 7 gelangenden Fluoreszenzlichtes ist abhängig von der Entfernung des Ortes des Lichtflecks zu der jeweiligen Seitenfläche 4 bis 7. Dementsprechend ändert sich die Intensität der über die elektrischen Anschlüsse 12 bis 19 der Fotodetektor-Einrichtungen 8 bis 11 fließenden elektrischen Ströme $I_1$ bis $I_4$. Aus den Strömen $I_1$ und $I_2$ wird in der Meßwertauswerteschaltung 50 die Spannung $U_{21}$ gewonnen, und aus den Strömen $I_3$ und $I_4$ wird in der Meßwertauswerteschaltung 50 die Spannung $U_{22}$ gewonnen, deren jeweilige Größe ein Maß für die Koordinaten 21 bzw. 22 des abgebildeten Lichtflecks ist.

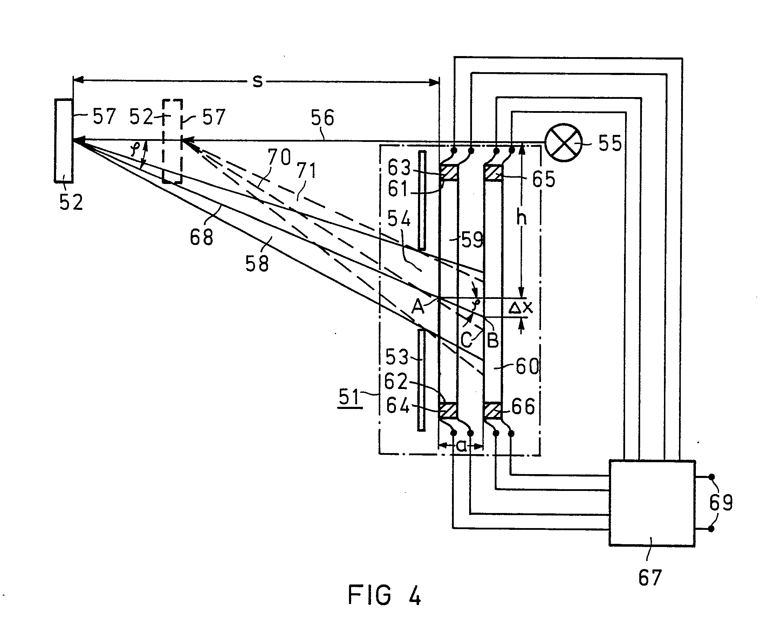

Die gezeigte Einrichtung gemäß dem Ausführungsbeispiel in Figur 4 enthält einen Lichtempfänger 51, der auf der einem Objekt 52 zugewandten Seite eine Blende 53 mit einer Öffnung 54 aufweist. Dem Lichtempfänger 51 ist räumlich fest eine Lichtquelle 55 zugeordnet, die eine Optik enthält, von der ein gebündelter Lichtstrahl 56 zu dem Objekt 52 gesandt wird.

Von dem Objekt 52, das sich zunächst in der ausgezogen gezeichneten Position befinden soll, wird aufgrund einer gewissen Rauheit seiner Oberfläche 57 diffuses Licht 58 in Richtung auf den Lichtempfänger 51 reflektiert. Das diffuse Licht 58 tritt durch die Öffnung 54 der Blende 53 hindurch und fällt zunächst auf eine Fluoreszenzplatte 59, die in einer Ebene parallel zur Ebene der Blende 53 angeordnet ist. Ein Teil des diffusen Lichtes 58 dringt durch die eine Fluoreszenzplatte 59 hindurch und fällt auf eine weitere Fluoreszenzplatte 60, die in Einfallsrichtung des diffusen Lichtes 58 hinter der einen Fluoreszenzplatte 59 und in einer Ebene parallel zur Ebene der Fluoreszenzplatte 59 liegt.

Die eine Fluoreszenzplatte 59 ist auf einander gegenüberliegenden Seiten 61 und 62 mit jeweils einer Fotodetektor-Einrichtung 63 und 64 versehen. Entsprechend ist die weitere Fluoreszenzplatte 60 auf einander gegenüberliegenden Seiten mit einer Fotodetektor-Einrichtung 65 und einer weiteren Fotodetektor-Einrichtung 66 versehen. Die elektrischen Anschlüsse aller Fotodetektor-Einrichtungen 63 bis 66 sind mit einer Auswerteschaltung 67 verbunden.

Die dargestellte Meßanordnung arbeitet in folgender Weise:

Wird von der Lichtquelle 55 der gebündelte Lichtstrahl 56 auf die Oberfläche 57 des Objektes 52 gesandt, dann tritt ein Schwerpunktstrahl 68 des reflektierten, diffusen Lichtes 58 im Punkte A in die eine Fluoreszenzplatte 59 ein.

Der Ort A wird mittels der Fotodetektor-Einrichtungen 63 und 64 dieser Fluoreszenzplatte 59 in der Auswerteschaltung 67 über die ihr zugeleiteten elektrischen Signale ermittelt. Der Schwerpunktstrahl 18 fällt im Punkte B auch auf die weitere Fluoreszenzplatte 60; der Ort B wird in entsprechender Weise mittels der Fotodetektor-Einrichtungen 55 und 56 in der Auswerteschaltung 67 ermittelt, die diesbezüglich so aufgebaut sein kann, wie es in der bereits erwähnten Parallelanmeldung im einzelnen beschrieben ist. In der Auswerteschaltung 67 wird aus den aufgenommenen elektrischen Meßwerten eine Größe Δx ermittelt, die der Differenz der Punkte A und B auf den Fluoreszenzplatten 59 und 60 entspricht. Da die beiden Fluoreszenzplatten 59 und 60 in einem festen Abstand a angeordnet sind, läßt sich in der Auswerteschaltung ohne weiteres über die Beziehung

$$\tan \varphi = \frac{\Delta x}{a} \qquad\qquad (1)$$

der Winkel φ bestimmen, der ein Maß für den Einfallswinkel des diffusen Lichtes 58 darstellt.

Ist die Lichtquelle 55 -wie es im dargestellten Ausführungsbeispiel der Fall ist -räumlich fest dem Lichtempfänger 51 zugeordnet, und zwar so, daß der von der Lichtquelle 55 abgegebene gebündelte Lichtstrahl 56 senkrecht zur Ebene der Blende 53 bzw. der Fluoreszenzplatten 59 und 60 verläuft, dann läßt sich mit der dargestellten Meßanordnung auch der Abstand s des Meßobjektes 52 vom Lichtempfänger 51 bestimmen. Ist nämlich der Abstand h bekannt, dann ist der Abstand s durch die Beziehung bestimmt:
s = a . h / Δx (2)

Aus den Beziehungen (1) und (2) ergibt sich, daß in der Auswerteschaltung 67 nach Bestimmung von Δx lediglich noch die Rechenoperation gemäß Gleichung (2) durchgeführt werden muß, um den Abstand s eines Objektes 52 von einem Lichtempfänger 51 bzw. einer Lichtquelle 55 ermitteln zu können. Eine entsprechende Meßgröße ist dann am Ausgang 69 der Auswerteschaltung 67 abnehmbar.

Mit der erfindungsgemäßen Meßanordnung ist ferner eine Abstandsänderung eines Objektes zu einer Lichtquelle 55 oder einem Lichtempfänger 51 ermittelbar. Hat sich beispielsweise das Objekt 52 in die in der Figur 4 strichliert eingezeichnete Lage bewegt, dann wird von der Oberfläche 57 des Meßobjektes 52 diffuses Licht in einer Weise auf die Fluoreszenzplatten 59 und 60 des Lichtempfängers 61 gelenkt, wie dies in der Figur 4 durch die strichlierten Strahlen wiedergegeben ist. Ein Schwerpunktstrahl 70 des diffusen Lichtes 71 tritt dann zwar wieder im Punkte A in die Fluoreszenzplatte 59 ein, fällt jedoch im Punkte C auf die weitere Fluoreszenzplatte 60. Es ergibt sich dann ein anderes Δx und damit ein anderer Abstand s des Objektes 52 vom Lichtempfänger 51. Durch Differenzbildung der unterschiedlichen gemessenen Abstände s in der Auswerteschaltung 67 entsprechend den elektrischen Größen kann dann am Ausgang 69 eine Meßgröße erzeugt werden, die der Abstandsänderung proportional ist.


## Ansprüche

1. Einrichtung zur Bestimmung der Orte von Lichtflecken auf mindestens einem flächenhaften Lichtsensor mit elektrischen Anschlußelementen, an denen eine elektrische Auswerteeinrichtung zur Gewinnung mindestens eines elektrischen Signals angeschlossen ist, aus denen die Orte der Lichtflecken herleitbar sind, **dadurch gekennzeichnet,**
-daß der mindestens eine Lichtsensor (1) eine Fluoreszenzplatte (2) enthält, auf deren Oberseite (3) der Lichtfleck abbildbar ist,
-daß zumindest an zwei einander gegenüberliegenden Seitenflächen (4, 5, 6, 7) der Fluoreszenzplatte (2) jeweils eine Fotodetektor-Einrichtung (8, 9, 10, 11) angeordnet ist
-und daß elektrische Anschlüsse (12 bis 19) der Fotodetektor-Einrichtungen die elektrischen Anschlußelemente des Lichtsensors (1) sind (Figur 1).

2. Einrichtung nach Anspruch 1, **dadurch gekennzeichnet,**
-daß die Fluoreszenzplatte (2) quaderförmig ist
-und daß an jeder Seitenfläche (4, 5, 6, 7) der Fluoreszenzplatte (2) eine Fotodetektor-Einrichtung (8, 9, 10, 11) angeordnet ist (Figur 1).

3. Einrichtung nach Anspruch 1 oder 2, **dadurch gekennzeichnet,**
-daß jede Fotodetektor-Einrichtung (8, 9, 10, 11) aus mehreren räumlich nebeneinander angeordneten und elektrisch parallel geschalteten Fotodioden besteht, die an der jeweiligen Seitenfläche (4, 5, 6, 7) der Fluoreszenzplatte (2) anliegen.

4. Einrichtung nach Anspruch 1 oder 2, **dadurch gekennzeichnet,**
-daß jede Fotodetektor-Einrichtung (24, 25, 26, 27) eine Lichtleiteranordnung (29, 30, 31, 32) enthält, die an ihrem einen Ende (33, 34, 35, 36) mit der jeweiligen Seitenfläche (4, 5, 6, 7) der Fluoreszenzplatte (2) optisch gekoppelt ist und an ihrem anderen Ende (41, 42, 43, 44) ein Fotoelement (45, 46, 47, 48) trägt.

5. Einrichtung nach Anspruch 4, **dadurch gekennzeichnet,**
-daß die Lichtleiteranordnung aus mehreren Lichtleitfasern besteht, die an ihrem einen Ende mit ihrer Stirnseite der jeweiligen Seitenfläche gegenüberliegend angeordnet sind.

6. Einrichtung nach Anspruch 4,**dadurch gekennzeichnet,**
-daß die Lichtleiteranordnung aus einem Fluoreszenzlichtleiter (29, 30, 31, 32) besteht, der sich mit seinem einen Ende (33, 34, 35, 36) entlang der jeweiligen Seitenfläche (4, 5, 6, 7) erstreckt.

7. Einrichtung nach einem der vorhergehenden Ansprüche mit einer Lichtsensoranordnung, die eine vom Einfallswinkel abhängige elektrische Größe erzeugt, **dadurch gekennzeichnet,**
-daß zur Bestimmung des Einfallswinkels von Licht die Lichtsensoranordnung (51) in Einfallsrichtung des Lichtes (58) hinter einer Blende (53) eine Einrichtung mit zwei parallel zur Blende (53) und parallel zueinander angeordneten Fluoreszenzplatten (59, 60) enthält, die jeweils zumindest an zwei einander gegenüberliegenden Seitenflächen (61, 62) jeweils eine Fotodetektor-Einrichtung (62, 63; 65, 66) tragen,
-und daß den Fotodetektor-Einrichtungen (62, 63; 65, 66) eine elektronische Auswerteschaltung (67) nachgeordnet ist, die eine dem Einfallswinkel des Lichtes (58) entsprechende Meßgröße abgibt.

8. Einrichtung nach Anspruch 7, **gekennzeichnet durch**
-ihre Anwendung zur Abstandsmessung eines Objektes (52), indem dem Lichtempfänger (51) eine einen gebündelten Lichtstrahl (56) auf das Objekt (52) sendende Lichtquelle (55) räumlich fest zugeordnet ist.

9. Anwendung der Einrichtung nach Anspruch 8, **dadurch gekennzeichnet,**
-daß die Lichtquelle (55) derart angeordnet ist, daß der von ihr ausgesendete, gebündelte Lichtstrahl (56) im rechten Winkel zur Ebene der Blende (53) verläuft.

FIG 1

FIG 2

FIG 3

FIG 4